(19) Europäisches Patentamt
European Patent Office
Office européen des brevets

(11) **EP 4 224 365 A1**

(12) **EUROPEAN PATENT APPLICATION**
published in accordance with Art. 153(4) EPC

(43) Date of publication:
**09.08.2023 Bulletin 2023/32**

(21) Application number: **21891075.0**

(22) Date of filing: **08.11.2021**

(51) International Patent Classification (IPC):
*G06K 9/62* (2022.01)

(52) Cooperative Patent Classification (CPC):
**G06F 16/29; G06F 18/00**

(86) International application number:
**PCT/CN2021/129337**

(87) International publication number:
**WO 2022/100550 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2020 CN 202011254494**

(71) Applicant: **Huawei Technologies Co., Ltd.
Shenzhen, Guangdong 518129 (CN)**

(72) Inventors:
• **FEI, Wenkai
Shenzhen, Guangdong 518129 (CN)**
• **LIU, Jianqin
Shenzhen, Guangdong 518129 (CN)**

(74) Representative: **Maiwald GmbH
Engineering
Elisenhof
Elisenstrasse 3
80335 München (DE)**

(54) **DYNAMIC EVENT CLASSIFICATION METHOD AND DEVICE**

(57) Disclosed are a method for classifying dynamic events and a device. The method includes: obtaining at least one association degree between m types of dynamic events based on n dimensions, and grouping the m types of dynamic events based on the at least one association degree to obtain a plurality of groups, where the m types of dynamic events are events that cause a change to a dynamic information layer of a high-definition map, n and m are integers greater than 1, and a first type of dynamic event in the m types of dynamic events belongs to a first group in the plurality of groups; and based on that an obtained first dynamic event is the first type of dynamic event, determining that the first dynamic event belongs to the first group. This method can reduce resource overheads and improve storage and management efficiency during storage and management of dynamic events of a high-definition map.

S101: Obtain at least one association degree between m types of dynamic events based on n dimensions, and group the m types of dynamic events based on the at least one association degree to obtain a plurality of groups, where n and m are integers greater than 1, and the m types of dynamic events are events that cause a change to information in a high-definition map

S102: Based on that an obtained first dynamic event is a first type of dynamic event, determine that the first dynamic event belongs to a first group

FIG. 1

## Description

This application claims priority to Chinese Patent Application No. 202011254494.8, filed with the China National Intellectual Property Administration on November 11, 2020 and entitled "METHOD FOR CLASSIFYING DYNAMIC EVENTS AND DEVICE", which is incorporated herein by reference in its entirety.

## TECHNICAL FIELD

This application relates to the field of data processing, and in particular, to a method for classifying dynamic events of a high-definition map and a device.

## BACKGROUND

As one of key capabilities for implementing autonomous driving, a high-definition map becomes an effective supplement to an existing sensor for autonomous driving, and provides a more reliable sensing capability for a vehicle. Compared with a conventional navigation map, the high-definition map that serves autonomous driving has higher requirements in all aspects. In addition, the high-definition map can cooperate with sensors and algorithms to support decision-making.

In an autonomous driving process, an external environment dynamically changes, and driving of a vehicle is affected. Therefore, in addition to a static layer, the high-definition map increasingly needs more dynamic information to meet a development requirement in the transportation field. However, currently dynamic event classification of the high-definition map is in a concept phase, and an existing concept is likely to be classifying dynamic events based on an event update frequency. However, a dynamic event classification boundary obtained through division based on the update frequency is inappropriate, so that a storage structure is unclear when a large quantity of dynamic events are stored, and large storage resource and computing resource overheads are used during management.

In conclusion, how to reduce resource overheads when storing and managing dynamic events of a high-definition map is a technical problem that needs to be resolved by a person skilled in the art.

## SUMMARY

This application provides a method for classifying dynamic events and a device, to reduce resource overheads and improve storage and management efficiency during storage and management of dynamic events of a high-definition map.

According to a first aspect, this application provides a method for classifying dynamic events. The method includes:

obtaining at least one association degree between m types of dynamic events based on n dimensions, and grouping the m types of dynamic events based on the at least one association degree to obtain a plurality of groups, where the m types of dynamic events are events that cause a change to a dynamic information layer of a high-definition map, n and m are integers greater than 1, and a first type of dynamic event in the m types of dynamic events belongs to a first group in the plurality of groups; and based on that an obtained first dynamic event is the first type of dynamic event, determining that the first dynamic event belongs to the first group.

Compared with a conventional technology, in this application, various dynamic events used by the high-definition map are classified from a plurality of dimensions, so that more appropriate classification can be implemented, a storage structure of the various dynamic events is clear and appropriate, and management is facilitated. This can reduce resource overheads and improve storage and management efficiency during storage and management of the dynamic events of the high-definition map.

In a possible implementation, the n dimensions include at least two of the following dimensions: a fine-grained dynamic event range covered by the event, a meaning of the event, a geometric expression of the event, impact of the event, an action object of the event, a source of the event, a priority of the event, or an event status update frequency.

This application provides several consideration dimensions for dynamic event classification as an example. Dynamic events are classified based on at least two of these dimensions. Compared with the conventional technology, classification appropriateness can be improved, thereby facilitating storage and management.

In a possible implementation, the obtaining at least one association degree between m types of dynamic events based on n dimensions includes: obtaining an association degree between every two of the m types of dynamic events in each of the n dimensions; and obtaining the at least one association degree by combining the association degree in each dimension.

In this application, an association status between every two dynamic events is first considered from a single dimension, and then the association statuses between every two dynamic events in a plurality of dimensions are combined to be used as a final classification basis, so that dynamic events are appropriately classified based on the plurality of dimensions.

In a possible implementation, the grouping the m types of dynamic events based on the at least one association degree to obtain a plurality of groups includes: comparing each of the at least one association degree with a first numerical range; and grouping two types of dynamic events corresponding to the association degree in the first numerical range into a same group.

In this application, a classification standard is preset, and only dynamic events that meet the standard can be classified into a same type. This ensures classification appropriateness.

In a possible implementation, the n dimensions have a priority order. The obtaining at least one association degree between m types of dynamic events based on n dimensions, and grouping the m types of dynamic events based on the at least one association degree to obtain a plurality of groups includes:

obtaining a first association degree between every two of the m types of dynamic events in a first dimension;
grouping the m types of dynamic events based on the first association degree to obtain a first plurality of groups, where the first plurality of groups include a second group, the second group includes p types of dynamic events in the m types of dynamic events, and p is a positive integer greater than 1;
obtaining a second association degree between every two of the p types of dynamic events in a second dimension, where the second dimension is a dimension that is in the n dimensions and whose priority is one level lower than that of the first dimension; and
grouping the p types of dynamic events based on the second association degree to obtain a second plurality of groups.

In this application, dynamic events are classified in descending order of priorities of a plurality of dimensions. The dynamic events are first classified based on a dimension with a highest priority, and then classification in each dimension is further performed based on a classification result of a higher-level dimension until classification based on a dimension with a lowest priority is completed. A result of classification completion is a final classification result. In this application, a plurality of dimensions are also comprehensively considered for classifying dynamic events. This improves appropriateness of event classification.

In a possible implementation, the m types of dynamic events are associated with a plurality of layers of the high-definition map based on the plurality of groups.

For example, the m types of dynamic events include a second dynamic event and a third dynamic event. The second dynamic event and the first dynamic event both belong to the first group in the plurality of groups. The third dynamic event belongs to the second group in the plurality of groups. The method further includes:
associating the first dynamic event and the second dynamic event with a first layer for expression, and associating the third dynamic event with a second layer for expression, where the first layer and the second layer are two different dynamic information layers of the high-definition map.

In this application, dynamic events in a same group are associated with a same layer for expression, and dynamic events in different groups are associated with different layers for expression, so that various dynamic events can be efficiently and orderly expressed on the high-definition map.

According to a second aspect, this application provides a method for classifying dynamic events. The method includes:
obtaining at least one association degree between m types of dynamic events based on n dimensions, and grouping the m types of dynamic events based on the at least one association degree to obtain a plurality of groups, where the m types of dynamic events are events that cause a change to a dynamic information layer of a high-definition map, and n and m are integers greater than 1.

Compared with a conventional technology, in this application, various dynamic events used by the high-definition map are classified from a plurality of dimensions, so that more appropriate classification can be implemented, a storage structure of the various dynamic events is clear and appropriate, and management is facilitated. This can reduce resource overheads and improve storage and management efficiency during storage and management of the dynamic events of the high-definition map.

In a possible implementation, the n dimensions include at least two of the following dimensions: a fine-grained dynamic event range covered by the event, a meaning of the event, a geometric expression of the event, impact of the event, an action object of the event, a source of the event, a priority of the event, or an event status update frequency.

This application provides several consideration dimensions for dynamic event classification as an example. Dynamic events are classified based on at least two of these dimensions. Compared with the conventional technology, classification appropriateness can be improved, thereby facilitating storage and management.

In a possible implementation, the obtaining at least one association degree between m types of dynamic events based on n dimensions includes: obtaining an association degree between every two of the m types of dynamic events in each of the n dimensions; and obtaining the at least one association degree by combining the association degree in each dimension.

In this application, an association status between every two dynamic events is first considered from a single dimension, and then the association statuses between every two dynamic events in a plurality of dimensions are combined to be used as a final classification basis, so that dynamic events are appropriately classified based on the plurality of dimensions.

In a possible implementation, the grouping the m types of dynamic events based on the at least one association degree to obtain a plurality of groups includes: comparing each of the at least one association degree with a first numerical range; and grouping two types of dynamic events corresponding to the association degree in the first numerical range into a same group.

In this application, a classification standard is preset, and only dynamic events that meet the standard can be classified into a same type. This ensures classification appropriateness.

In a possible implementation, the n dimensions have a priority order. The obtaining at least one association degree between m types of dynamic events based on n dimensions, and grouping the m types of dynamic events based on the at least one association degree to obtain a plurality of groups includes:

obtaining a first association degree between every two of the m types of dynamic events in a first dimension;
grouping the m types of dynamic events based on the first association degree to obtain a first plurality of groups, where the first plurality of groups include a second group, the second group includes p types of dynamic events in the m types of dynamic events, and p is a positive integer greater than 1;
obtaining a second association degree between every two of the p types of dynamic events in a second dimension, where the second dimension is a dimension that is in the n dimensions and whose priority is one level lower than that of the first dimension; and
grouping the p types of dynamic events based on the second association degree to obtain a second plurality of groups.

In this application, dynamic events are classified in descending order of priorities of a plurality of dimensions. The dynamic events are first classified based on a dimension with a highest priority, and then classification in each dimension is further performed based on a classification result of a higher-level dimension until classification based on a dimension with a lowest priority is completed. A result of classification completion is a final classification result. In this application, a plurality of dimensions are also comprehensively considered for classifying dynamic events. This improves appropriateness of event classification.

In a possible implementation, the m types of dynamic events are associated with a plurality of layers of the high-definition map based on the plurality of groups.

For example, the m types of dynamic events include a second dynamic event and a third dynamic event. The second dynamic event and the first dynamic event both belong to the first group in the plurality of groups. The third dynamic event belongs to the second group in the plurality of groups. The method further includes:
associating the first dynamic event and the second dynamic event with a first layer for expression, and associating the third dynamic event with a second layer for expression, where the first layer and the second layer are two different dynamic information layers of the high-definition map.

In this application, dynamic events in a same group are associated with a same layer for expression, and dynamic events in different groups are associated with different layers for expression, so that various dynamic events can be efficiently and orderly expressed on the high-definition map.

According to a third aspect, this application provides a device. The device includes:

an obtaining unit, configured to obtain at least one association degree between m types of dynamic events based on n dimensions;
a grouping unit, configured to group the m types of dynamic events based on the at least one association degree to obtain a plurality of groups, where the m types of dynamic events are events that cause a change to a dynamic information layer of a high-definition map, n and m are integers greater than 1, and a first type of dynamic event in the m types of dynamic events belongs to a first group in the plurality of groups; and
a determining unit, configured to: based on that an obtained first dynamic event is the first type of dynamic event, determine that the first dynamic event belongs to the first group.

In a possible implementation, the n dimensions include at least two of the following dimensions: a fine-grained dynamic event range covered by the event, a meaning of the event, a geometric expression of the event, impact of the event, an action object of the event, a source of the event, a priority of the event, or an event status update frequency.

In a possible implementation, the obtaining unit is specifically configured to:

obtain an association degree between every two of the m types of dynamic events in each of the n dimensions; and

obtain the at least one association degree by combining the association degree in each dimension.

In a possible implementation, the grouping unit is specifically configured to:

compare each of the at least one association degree with a first numerical range; and
group two types of dynamic events corresponding to the association degree in the first numerical range into a same group.

In a possible implementation, the obtaining unit is specifically configured to obtain a first association degree between every two of the m types of dynamic events in a first dimension.
The grouping unit is specifically configured to group the m types of dynamic events based on the first association degree to obtain a first plurality of groups, where the first plurality of groups include a second group, the second group includes p types of dynamic events in the m types of dynamic events, and p is a positive integer greater than 1.
The obtaining unit is further specifically configured to obtain a second association degree between every two of the p types of dynamic events in a second dimension, where the second dimension is a dimension that is in the n dimensions and whose priority is one level lower than that of the first dimension.
The grouping unit is further specifically configured to group the p types of dynamic events based on the second association degree to obtain a second plurality of groups.
In a possible implementation, the device further includes:
an association unit, configured to associate the m types of dynamic events with a plurality of layers of the high-definition map based on the plurality of groups.
According to a fourth aspect, this application provides a device. The device includes:

an obtaining unit, configured to obtain at least one association degree between m types of dynamic events based on n dimensions; and
a grouping unit, configured to group the m types of dynamic events based on the at least one association degree to obtain a plurality of groups, where the m types of dynamic events are events that cause a change to a dynamic information layer of a high-definition map, and n and m are integers greater than 1.

In a possible implementation, the n dimensions include at least two of the following dimensions: a fine-grained dynamic event range covered by the event, a meaning of the event, a geometric expression of the event, impact of the event, an action object of the event, a source of the event, a priority of the event, or an event status update frequency.
In a possible implementation, the obtaining unit is specifically configured to:

obtain an association degree between every two of the m types of dynamic events in each of the n dimensions; and
obtain the at least one association degree by combining the association degree in each dimension.

In a possible implementation, the grouping unit is specifically configured to:

compare each of the at least one association degree with a first numerical range; and
group two types of dynamic events corresponding to the association degree in the first numerical range into a same group.

In a possible implementation, the obtaining unit is specifically configured to obtain a first association degree between every two of the m types of dynamic events in a first dimension.
The grouping unit is specifically configured to group the m types of dynamic events based on the first association degree to obtain a first plurality of groups, where the first plurality of groups include a second group, the second group includes p types of dynamic events in the m types of dynamic events, and p is a positive integer greater than 1.
The obtaining unit is further specifically configured to obtain a second association degree between every two of the p types of dynamic events in a second dimension, where the second dimension is a dimension that is in the n dimensions and whose priority is one level lower than that of the first dimension.
The grouping unit is further specifically configured to group the p types of dynamic events based on the second association degree to obtain a second plurality of groups.
In a possible implementation, the device further includes:
an association unit, configured to associate the m types of dynamic events with a plurality of layers of the high-definition map based on the plurality of groups.
According to a fifth aspect, this application provides a device. The device may include a processor, configured to implement the method for classifying dynamic events described in the first aspect. The device may further include a memory. The memory is coupled to the processor. When executing a computer program stored in the memory, the processor may implement the method for classifying dynamic events described in any one of the first aspect or the possible implementations of the first aspect. The device may further include a communication port. The communication port is used by the device to communicate with another device. For example, the communication port may be a transceiver, a circuit, a bus, a module, or a communication port of another type.

In a possible implementation, the device may include:

the memory, configured to store the computer program; and
the processor, configured to obtain at least one association degree between m types of dynamic events based on n dimensions, and group the m types of dynamic events based on the at least one association degree to obtain a plurality of groups; and based on that an obtained first dynamic event is a first type of dynamic event, determine that the first dynamic event belongs to a first group. The m types of dynamic events are events that cause a change to a dynamic information layer of a high-definition map, n and m are integers greater than 1, and the first type of dynamic event in the m types of dynamic events belongs to the first group in the plurality of groups.

It should be noted that the computer program in the memory in this application may be pre-stored, or may be downloaded from the internet and then stored when the device is used. A source of the computer program in the memory is not specifically limited in this application. The coupling in this embodiment of this application is indirect coupling or connection between apparatuses, units, or modules for information exchange between the apparatuses, the units, or the modules, and may be in electrical, mechanical, or other forms.

According to a sixth aspect, this application provides a device. The device may include a processor, configured to implement the method for classifying dynamic events described in the second aspect. The device may further include a memory. The memory is coupled to the processor. When executing a computer program stored in the memory, the processor may implement the method for classifying dynamic events described in any one of the second aspect or the possible implementations of the second aspect. The device may further include a communication port. The communication port is used by the device to communicate with another device. For example, the communication port may be a transceiver, a circuit, a bus, a module, or a communication port of another type.

In a possible implementation, the device may include:

the memory, configured to store the computer program; and
the processor, configured to obtain at least one association degree between m types of dynamic events based on n dimensions, and group the m types of dynamic events based on the at least one association degree to obtain a plurality of groups. The m types of dynamic events are events that cause a change to a dynamic information layer of a high-definition map, and n and m are integers greater than 1.

It should be noted that the computer program in the memory in this application may be pre-stored, or may be downloaded from the internet and then stored when the device is used. A source of the computer program in the memory is not specifically limited in this application. The coupling in this embodiment of this application is indirect coupling or connection between apparatuses, units, or modules for information exchange between the apparatuses, the units, or the modules, and may be in electrical, mechanical, or other forms.

According to a seventh aspect, this application provides a computer-readable storage medium. The computer-readable storage medium stores a computer program. The computer program is executed by a processor to implement the method according to any one of the first aspect or the second aspect.

According to an eighth aspect, this application provides a computer program product. When the computer program product is read and executed by a computer, the method according to any one of the first aspect or the second aspect is performed.

The solutions provided in the second aspect to the fifth aspect are used to implement or cooperate to implement the method provided in the first aspect, and therefore can achieve beneficial effects the same as or corresponding to those in the first aspect. Details are not described herein again.

In conclusion, compared with a conventional technology, in this application, various dynamic events used by the high-definition map are classified from a plurality of dimensions, so that more appropriate classification can be implemented, a storage structure of the various dynamic events is clear and appropriate, and management is facilitated. This can reduce resource overheads and improve storage and management efficiency during storage and management of the dynamic events of the high-definition map.

## BRIEF DESCRIPTION OF DRAWINGS

The following briefly describes the accompanying drawings for embodiments of this application.

FIG. 1 is a schematic flowchart of a method for classifying dynamic events according to an embodiment of this application;

FIG. 2 and FIG. 3 are schematic diagrams of dynamic event classification results according to this application;

FIG. 4 is a schematic diagram of a logical structure of a device according to an embodiment of this application; and

FIG. 5 is a schematic diagram of a hardware structure of a device according to an embodiment of this application.

## DESCRIPTION OF EMBODIMENTS

The following describes the technical solutions in embodiments of this application with reference to the accompanying drawings.

To better understand a method for classifying dynamic events provided in embodiments of the present application, the following first describes an example of a scenario applicable to embodiments of the present application.

For example, the method for classifying dynamic events provided in this application may be applied to a high-definition map. With the continuous development of fields such as autonomous driving, semi-autonomous driving, and traffic networking, the high-definition map gradually becomes a tool for better serving these fields. For example, in the autonomous driving field, because the high-definition map describes a road more accurately, clearly, and comprehensively, and can reflect various dynamic events on the road in real time, a vehicle can be provided with much time for pre-determining, and driving planning can be performed in advance, thereby ensuring driving stability and economical performance. In addition, the high-definition map can help the vehicle reduce a calculation amount. When the vehicle needs to pass through an intersection, the vehicle needs to sense a status of a traffic light in front of the vehicle in advance. In this case, the high-definition map can help the vehicle locate a specific area in which the traffic light is located, thereby effectively reducing a calculation amount of full-range scanning and recognition.

The method for classifying dynamic events provided in this application may be further applied to another field, and is not limited to the field of the high-definition map described above.

Classification of dynamic events in an existing high-definition map is mostly in a concept phase, and a classification manner is not clear. As a result, a storage structure of dynamic events in a server is unclear, and management resource overheads are high. To resolve this problem, this application provides a method for classifying dynamic events. The method may be applicable to but is not limited to the application field described above. Optionally, the method may be implemented in a server, and then a classification result is applied to a high-definition map. In embodiments of this application, grouping is classification, and one group represents one type.

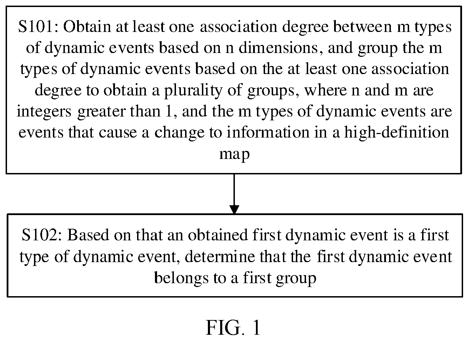

As shown in FIG. 1, the method may include but is not limited to the following steps.

S101: Obtain at least one association degree between m types of dynamic events based on n dimensions, and group the m types of dynamic events based on the at least one association degree to obtain a plurality of groups, where n and m are integers greater than 1, and the m types of dynamic events are events that cause a change to a dynamic information layer of a high-definition map.

In a specific embodiment, the m types of dynamic events may include some or all of the following events:

Weather condition: The weather condition may include dynamic events such as a temperature status, an atmospheric pressure status, a humidity status, a sunny condition, a cloudy condition, a windy condition, a foggy condition, a rainy condition, a lightning condition, a snowy condition, a frosty condition, a thunder condition, and a hail condition.

The road covering condition or referred to as a road surface environment: The road covering condition may include dynamic events such as water, snow, and ice covering a road, and damage to the road.

Road adhesion coefficient status: The road adhesion coefficient status indicates adhesion between the road and a tire of a vehicle. The greater the adhesion, the less likely the vehicle slips.

Road visibility status: The road visibility status may be a visible distance caused by haze, light, or the like.

Temporary point of interest (point of interest, POI) status: The temporary point of interest status may include dynamic events such as a non-fixed point of interest, a temporarily available parking space, a temporarily available charging pile, and a temporary public service point.

Recommendation information status: The recommendation information status may include dynamic events such as user point of interest recommendation and trip recommendation.

Road traffic status: The road traffic status may include dynamic events such as traffic accidents, traffic control, road construction, and accident-prone areas.

Traffic flow status: The traffic flow status may include a quantity of vehicle flows on each road, and the like.

Traffic light status: The traffic light status may include dynamic events such as a traffic light phase status, semantic information, timing data, and an operating status.

Vehicle obstacle: The vehicle obstacle may include a type of a vehicle obstacle, motion information, vehicle light and door information, control information, driving behavior prediction information, and the like.

Other obstacles: The obstacles may include all obstacles except vehicle obstacles.

Risk warning information: The risk warning information may include a risk type (a collision risk and a landslide risk in each direction), a risk level, and mitigation suggestions.

Collaborative driving status: The collaborative driving status may refer to vehicle collaboration guidance information, including lane merging collaboration, steering collaboration, special vehicle avoidance, reverse stall parking collaboration, and the like.

Route planning status: The route planning status may refer to a planned driving route or the like that is made based on an existing road condition.

Network topology change status: The network topology change status may be a temporary drivable route change that is caused by a road traffic event and that is represented as a road line and lane line geometric expression change, an attribute change, or the like.

The foregoing describes some dynamic events applied to the high-definition map as an example. These dynamic events are updated to the high-definition map in real time, so that various dynamic statuses on a road can be provided in real time for an object that uses the high-definition map, like a vehicle, to provide a powerful reference for further route planning and behavior prediction. It should be noted that dynamic events actually used for the high-definition map are not limited to the foregoing events, and a specific dynamic event and a quantity are not limited in this application.

The n dimensions may include at least two of the following dimensions:
Fine-grained dynamic event range covered by the event: This dimension indicates a range of dynamic subevents included in a known dynamic event. Based on this, the dynamic subevents in the known range may be classified into a same type.

For example, the dynamic event, namely, the weather condition, may include a plurality of dynamic subevents such as a temperature status, an atmospheric pressure status, a humidity status, a sunny condition, a cloudy condition, a windy condition, a foggy condition, a rainy condition, a lightning condition, a snowy condition, a frosty condition, a thunder condition, and a hail condition that are known. In this case, the dynamic subevents such as a temperature status, an atmospheric pressure status, a humidity status, a sunny condition, a cloudy condition, a windy condition, a foggy condition, a rainy condition, a lightning condition, a snowy condition, a frosty condition, a thunder condition, and a hail condition may be classified into a same type.

Meaning of the event: This dimension indicates that events are classified based on meanings of names of the dynamic events.

For example, it may be learned from the meanings of the names that the two dynamic events including the rainy condition and the snowy condition belong to the weather condition. Therefore, the two dynamic events including the rainy condition and the snowy condition may be classified into the weather condition.

Geometric expression of the event: This dimension refers to a geometric form that represents each dynamic event on the high-definition map.

For example, dynamic events in the weather conditions such as the rainy condition, the snowy condition, the sunny condition, and the cloudy condition may be represented by a region-level planar geometric expression on the high-definition map. For another example, road construction and a traffic accident may be generally represented by using an irregular shape formed by vertexes and connection lines of a road-level or lane-level polygon.

The region-level planar geometric expression may be a polygonal plane, an annular plane, or the like. A difference between the region-level geometric expression and the road-level geometric expression lies in that a geometric location of a region-level event with a large impact range may be directly expressed in a map tile, and a geometric location of a road-level event needs to be expressed on a road. Relative coordinates of a location point of the road geometric expression are determined relative to a feature reference point on the road.

Impact of the event: This dimension refers to the impact of the dynamic event on the traffic road.

For example, road construction and traffic control may affect smoothness of the road or cause traffic congestion on the road. Rain and fog will affect the visibility distance of the road.

Action object of the event: This dimension refers to the object that is affected or should be notified after the dynamic event occurs. For example, an action object of waterlogging and covering is a road surface, and the waterlogging and the covering affect a road surface traffic status. An action object of the collaborative driving information is a vehicle, a driver, or the like.

Source of the event: This dimension refers to the source of the dynamic event. For example, a source of the weather condition is a meteorological bureau, and a source of the road traffic information is a traffic bureau.

Event status update frequency: This dimension refers to the frequency of updating the dynamic event. For example, for road construction, if project duration is short, the update frequency is high. If project duration is long, the update frequency is low. For another example, the update frequency of the weather condition is uncertain.

Priority of the event: This dimension refers to an importance degree of the dynamic event or an impact degree of the dynamic event on a safety level in a driving process. For example, a priority of the weather condition is higher than that of the temporary point of interest information. The weather condition directly affects driving safety and stability. The temporary point of interest information is only some additional dynamic events. Whether the temporary point of interest information exists scarcely affect driving safety and stability.

The foregoing example describes a plurality of consideration dimensions that may be used for dynamic event classification. It should be noted that an actually considered dimension is not limited to the foregoing description, and a specific consideration dimension is not limited in this application.

Based on the foregoing description, there may be a plurality of implementations for the obtaining at least one association degree between m types of dynamic events based on n dimensions, and grouping the m types of dynamic events based on the at least one association degree to obtain a plurality of groups. The following describes two possible implementations by using examples.

The following first describes an implementation 1.

In this implementation, the association degree between every two of the m types of dynamic events in each of the n dimensions is first obtained, and the at least one association degree is obtained by combining the association degree in each dimension. Then, each of the at least one association degree is compared with a first numerical range; and two types of dynamic events corresponding to the association degree in the first numerical range are grouped into a same group.

In a specific embodiment, the association degree between every two of the dynamic events in each dimension may be parameterized to obtain a specific value, and then a comprehensive association degree between every two of the dynamic events is calculated by combining the association degree in each dimension. The comprehensive association degree between every two of the m types of dynamic events is the at least one association degree. In a possible implementation, the comprehensive association degree between every two of the dynamic events may be calculated according to the following equation:

$$R = \sqrt{\sum_{i=1}^{n}(k\_i * r\_i * r\_i)}$$

(1)

Alternatively, in a possible implementation, the comprehensive association degree between every two of the dynamic events may be calculated according to the following equation:

$$R = \frac{\sum_{i=1}^{n}(k\_i * r\_i)}{n}$$

(2)

In the foregoing equation (1) and equation (2), R is the comprehensive association degree between every two of the foregoing dynamic events, $r\_i$ is an association degree between two dynamic events in an $i^{th}$ dimension, k is a weight adjustment parameter, weights of the foregoing n dimensions may be the same or may be different, and may be specifically adjusted based on k, and $k\_i$ is a weight adjustment parameter in the $i^{th}$ dimension.

After the comprehensive association degree between every two of the dynamic events is obtained through calculation, the comprehensive association degrees may be separately compared with the first numerical range. Two dynamic events corresponding to the association degree in the first numerical range are grouped into a same group, namely, a same type. The first numerical range may be set based on an actual situation. This is not limited in this application.

For ease of understanding, an example is used below for description.

It is assumed that the to-be-classified dynamic events are five events: a weather condition, a road surface environment, road construction, a traffic accident, and a traffic light status. It is assumed that the five dynamic events are classified in two dimensions: the meaning of the event and the geometric expression of the event. In this case, association degrees between every two of the five dynamic events in each of the two dimensions are first obtained. The association degrees may be preconfigured, or may be calculated based on a specified condition. For example, for the association degrees between every two of the five dynamic events in each of the two dimensions, refer to Table 1 and Table 2.

**Table 1: Association degrees between every two of the dynamic events in the dimension of the meaning of the event**

| Event Name | Weather condition | Road surface environment | Road construction | Traffic accident | Traffic light status |
|---|---|---|---|---|---|
| Weather condition | 1 | 0.8 | 0 | 0 | 0 |

(continued)

| Event Name | Weather condition | Road surface environment | Road construction | Traffic accident | Traffic light status |
|---|---|---|---|---|---|
| Road surface environment | 0.8 | 1 | 0.2 | 0.2 | 0 |
| Road construction | 0 | 0.2 | 1 | 0.8 | 0.4 |
| Traffic accident | 0 | 0.2 | 0.8 | 1 | 0.4 |
| Traffic light status | 0 | 0 | 0.4 | 0.4 | 1 |

Table 1 shows an example of the association degrees between every two of the five dynamic events, namely, the weather condition, the road surface environment, the road construction, the traffic accident, and the traffic light status, in the dimension of the meaning of the event. In this application, for example, the meaning association degree between the dynamic events is represented by using a coefficient obtained through parameter normalization. It should be noted that the meaning association degree between the dynamic events may alternatively be represented in another manner. This is not limited in this application. For example, the association degree may be represented by scores. A full score of the association degree is 10, and a higher score indicates a higher association degree. For representation of an association degree in another dimension, refer to the description herein. Details are not described herein again.

Specifically, the weather condition affects the road surface environment, and the weather condition has a strong causality and a high meaning association degree. Therefore, a coefficient of a meaning association degree between the weather condition and the road surface environment is high and is 0.8. However, the weather condition is not associated with meanings of the other three dynamic events, and therefore a corresponding coefficient of a meaning association degree is 0.

The road surface environment, the road construction, and the traffic accident are all events that occur on a road surface, and their meanings are slightly associated. Therefore, a coefficient of a meaning association degree between the road surface environment and both of the road construction and the traffic accident is 0.2. In addition, the road surface environment is not associated with the traffic light status, and therefore a corresponding coefficient of a meaning association degree is 0.

Both the road construction and the traffic accident are road occupation events, and their meanings are closely associated. Therefore, the meaning association degree between the road construction and the traffic accident is 0.8. In addition, both the road construction and the traffic light are traffic events, and their meanings are slightly associated. Therefore, the coefficient of the meaning association degree is 0.4.

The traffic accident and the traffic light are also traffic events, and their meanings are slightly associated. Therefore, the coefficient of the meaning association degree is 0.4.

**Table 2: Association degrees between every two of the dynamic events in the dimension of the geometric expression of the event**

| Event Name | Weather condition | Road surface environment | Road construction | Traffic accident | Traffic light status |
|---|---|---|---|---|---|
| Weather condition | 1 | 0.8 | 0.4 | 0.4 | 0 |
| Road surface environment | 0.8 | 1 | 0.8 | 0.8 | 0 |
| Road construction | 0.4 | 0.8 | 1 | 1 | 0 |
| Traffic accident | 0.4 | 0.8 | 1 | 1 | 0 |
| Traffic light status | 0 | 0 | 0 | 0 | 1 |

Table 2 shows an example of the association degrees between every two of the five dynamic events, namely, the weather condition, the road surface environment, the road construction, the traffic accident, and the traffic light status, in the dimension of the geometric expression of the event.

Specifically, the small- and medium-range event of the weather condition may be expressed by using vertexes and connection lines of a road-level polygon (polygon), and the large-range event is expressed by using vertexes and connection lines of a region-level polygon. This is similar to the road surface environment. Therefore, the coefficient of the geometric expression association degree between the weather condition and the road surface environment is 0.8. It should be noted that, it may be learned from the foregoing description that location reference methods of road-level and region-level planar expressions are different. The road surface environment is generally a road-level, and the weather condition may be a road-level or a region-level. Therefore, expressions are similar, but are not completely the same. In addition, the geometric expression association degree between the weather condition and both of the road construction and the traffic accident is low, so the coefficient of the geometric expression association degree is 0.4.

The expression of small- and medium-range events in the road surface environment is the same as that of the road construction and the traffic accident. Irregular occupation ranges may be expressed by using vertexes and connection lines of the polygon. However, the expression of large-range events is different, and the geometric expression association degree is high. Therefore, the coefficient of the geometric expression association degree between the road environment and both of the road construction and the traffic accident is 0.8.

Generally, for the road construction and the traffic accident, the irregular occupation ranges may be expressed by using the vertexes and the connection lines of the polygon. Therefore, the coefficient of the geometric expression association degree between the two dynamic events is 1.

The traffic light status is generally an extended property associated with a traffic light ID on the map and does not need to be geometrically expressed. Therefore, the traffic light status has no geometric expression association with other events.

After the association degrees between every two of the five dynamic events in each of the foregoing two dimensions are obtained, the comprehensive association degree between every two of the five dynamic events may be obtained through calculation by combining the association degrees in each dimension. The foregoing equation (2) is used as an example to calculate the comprehensive association degree between every two of the five dynamic events. It is assumed that the weight adjustment parameters of the two dimensions are the same, and both are set to 1, the calculation equation may be simplified as:

$$R = \frac{\sum_{i=1}^{2}(r\_i)}{2} = \frac{r\_1 + r\_2}{2} \tag{3}$$

Two dynamic events, namely, the weather condition and the road surface environment, are used as an example. It may be learned from Table 1 and Table 2 that, in the two dimensions, namely, the meaning of the event and the geometric expression of the event, the coefficient of the association degree between the weather condition and the road surface environment is 0.8. In this case, 0.8 may be substituted into the equation (3) to obtain:

$$R = \frac{r\_1 + r\_2}{2} = \frac{0.8 + 0.8}{2} = 0.8$$

For the comprehensive association degree between every two of the foregoing five dynamic events calculated according to the foregoing equation (3), refer to Table 3.

Table 3: Comprehensive association degrees between every two of **the** dynamic events

| Event Name | Weather condition | Road surface environment | Road construction | Traffic accident | Traffic light status |
|---|---|---|---|---|---|
| Weather condition | 1 | 0.8 | 0.2 | 0.2 | 0 |
| Road surface environment | 0.8 | 1 | 0.5 | 0.5 | 0 |
| Road construction | 0.2 | 0.5 | 1 | 0.9 | 0.2 |
| Traffic accident | 0.2 | 0.5 | 0.9 | 1 | 0.2 |
| Traffic light status | 0 | 0 | 0.2 | 0. | 1 |

After the association degree between every two of the foregoing five dynamic events is obtained, the dynamic events may be classified by using a preset threshold. Assuming that the preset threshold is 0.7, when a comprehensive association degree between two dynamic events is greater than or equal to the threshold 0.7, or is in a range from 0.7 to 1, the two dynamic events may be classified into a same type. If a comprehensive association degree between two dynamic events is less than the threshold 0.7, or is in a range from 0 to 0.7, the two dynamic events do not belong to a same type.

Therefore, the foregoing five events are classified based on the comprehensive association degree in Table 3 according to this standard:

It may be learned from Table 3 that a comprehensive association degree between the weather condition and the road surface environment is 0.8, which is greater than the threshold 0.7, a comprehensive association degree between the weather condition and another dynamic event is far less than the threshold 0.7, and a comprehensive association degree between the road surface environment and another dynamic event is also less than the threshold 0.7. In this case, the weather condition and the road surface environment may belong to a same type.

A comprehensive association degree between the road construction and the traffic accident is 0.9, which is greater than the threshold 0.7, a comprehensive association degree between the road construction and another dynamic event is far less than the threshold 0.7, and a comprehensive association degree between the traffic accident and another dynamic event is also less than the threshold 0.7. In this case, the road construction and the traffic accident may be classified into a same type.

The comprehensive association degree between the traffic light status and any dynamic event is far less than the threshold 0.7. Therefore, the traffic light status is classified into an individual type.

In conclusion, the foregoing five dynamic events are classified.

In another possible implementation, the association degree between the dynamic events may alternatively be converted into a distance for calculation. The distance between the dynamic events herein refers to an abstract distance, namely, a degree to which the two dynamic events are irrelevant. A shorter distance value between dynamic events indicates a higher association degree between the dynamic events. For example, for the foregoing normalized association degree, the distance may be equal to 1 minus the association degree. For ease of understanding, refer to Table 4 and Table 5.

**Table 4: Distances between every two of the dynamic events in the dimension of the meaning of the event**

| Event Name | Weather condition | Road surface environment | Road construction | Traffic accident | Traffic light status |
|---|---|---|---|---|---|
| Weather condition | 0 | 0.2 | 1 | 1 | 1 |
| Road surface environment | 0.2 | 0 | 0.8 | 0.8 | 1 |
| Road construction | 1 | 0.8 | 0 | 0.2 | 0.6 |
| Traffic accident | 1 | 0.8 | 0.2 | 0 | 0.6 |
| Traffic light status | 1 | 1 | 0.6 | 0.6 | 0 |

It may be seen that, the distances between every two of the dynamic events in Table 4 are each obtained by subtracting a corresponding association degree in Table 1 from 1.

**Table 5: Distances between every two of the dynamic events in the dimension of the geometric expression of the event**

| Event Name | Weather condition | Road surface environment | Road construction | Traffic accident | Traffic light status |
|---|---|---|---|---|---|
| Weather condition | 0 | 0.2 | 0.6 | 0.6 | 1 |
| Road surface environment | 0.2 | 0 | 0.2 | 0.2 | 1 |
| Road construction | 0.6 | 0.2 | 0 | 0 | 1 |
| Traffic accident | 0.6 | 0.2 | 0 | 0 | 1 |
| Traffic light status | 1 | 1 | 1 | 1 | 0 |

It may be seen that, the distances between every two of the dynamic events in Table 5 are each obtained by subtracting a corresponding association degree in Table 2 from 1.

After the distances between every two of the five dynamic events in each of the foregoing two dimensions is obtained, a comprehensive distance between every two of the five dynamic events may be obtained through calculation by combining the distance in each dimension. The foregoing equation (1) is used as an example to calculate the comprehensive distance between every two of the five dynamic events. It is assumed that the weight adjustment parameters of the two dimensions are the same, and both are set to 1, the calculation equation may be simplified as:

$$R = \sqrt{\sum_{i=1}^{2}(r\_i * r\_i)} = \sqrt{(r\_1 * r\_1) + (r\_2 * r\_2)}$$

(4)

Two dynamic events, namely, the weather condition and the road surface environment, are used as an example. It may be learned from Table 4 and Table 5 that, in the two dimensions, namely, the meaning of the event and the geometric expression of the event, the coefficient of the distance between the weather condition and the road surface environment is 0.2. In this case, 0.2 may be substituted into the equation (4) to obtain:

$$R = \sqrt{(r\_1 * r\_1) + (r\_2 * r\_2)} = \sqrt{(0.2 * 0.2) + (0.2 * 0.2)} = 0.283$$

For the comprehensive distance between every two of the foregoing five dynamic events calculated according to the foregoing equation (4), refer to Table 6.

**Table 6: Comprehensive distances between every two of the dynamic events**

| Event Name | Weather condition | Road surface environment | Road construction | Traffic accident | Traffic light status |
|---|---|---|---|---|---|
| Weather condition | 0 | 0.283 | 1.17 | 1.17 | 1.41 |
| Road surface environment | 0.283 | 0 | 0.82 | 0.82 | 1.41 |
| Road construction | 1.17 | 0.82 | 0 | 0.2 | 1.17 |
| Traffic accident | 1.17 | 0.82 | 0.2 | 0 | 1.17 |
| Traffic light status | 1.41 | 1.41 | 1.17 | 1.17 | 0 |

After the distance between every two of the foregoing five dynamic events is obtained, the dynamic events may be classified by using a preset threshold. Assuming that the preset threshold is 0.3, when a comprehensive distance between two dynamic events is less than or equal to the threshold 0.3, or is in a range from 0 to 0.3, the two dynamic events may be classified into a same type. If a comprehensive distance between two dynamic events is greater than the threshold 0.3, or is in a range from 0.3 to 0.1, the two dynamic events do not belong to a same type.

Therefore, the foregoing five events are classified based on the comprehensive distance in Table 6 according to this standard:

It may be learned from Table 6 that a comprehensive distance between the weather condition and the road surface environment is 0.283, which is less than the threshold 0.3, a comprehensive distance between the weather condition and another dynamic event is far greater than the threshold 0.3, and a comprehensive distance between the road surface environment and another dynamic event is also greater than the threshold 0.3. In this case, the weather condition and the road surface environment may belong to a same type.

A comprehensive distance between the road construction and the traffic accident is 0.2, which is less than the threshold 0.3, a comprehensive distance between the road construction and another dynamic event is far greater than the threshold 0.3, and a comprehensive distance between the traffic accident and another dynamic event is also greater than the threshold 0.3. In this case, the road construction and the traffic accident may be classified into a same type.

The comprehensive distance between the traffic light status and any dynamic event is far greater than the threshold 0.3. Therefore, the traffic light status is classified into an individual type.

In conclusion, the foregoing five dynamic events are classified. The foregoing describes only an example of a process of classifying dynamic events. This application does not limit a dimension, a quantity of dynamic events, a specific association degree, a classification threshold, and the like used in a specific embodiment.

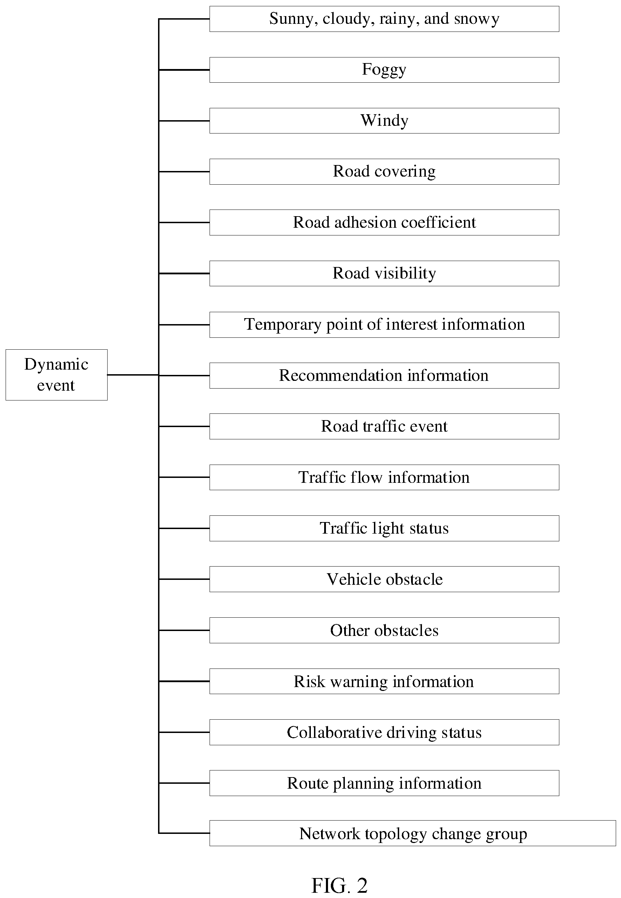

It should be noted that the five dynamic events in the foregoing example are not all dynamic events with a minimum division granularity. In a possible implementation, the m to-be-classified dynamic events may be dynamic events with a minimum granularity, for example, specific dynamic events such as rain, waterlogging, and construction. Then, the m types of dynamic events are classified by using the foregoing classification method. For a classification result, refer to FIG. 2. The classification result shown in FIG. 2 is only an example. In actual processing, different classification results are obtained based on different consideration dimensions.

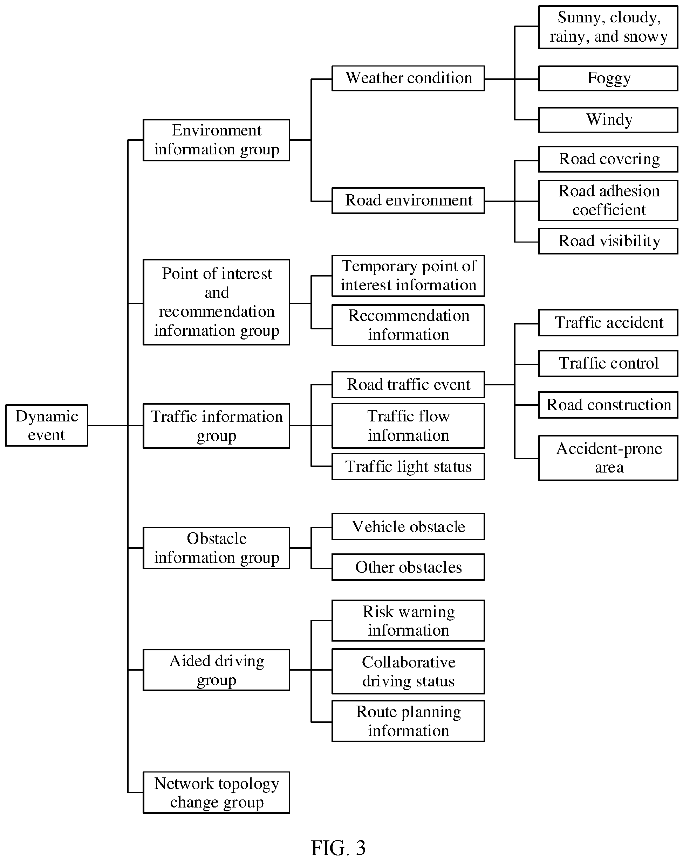

Optionally, it is assumed that the m types of dynamic events are classified to obtain a plurality of groups. The dynamic events of the plurality of groups may be considered as a plurality of types of dynamic events, then the plurality of types of dynamic events are further classified by using the foregoing classification method, and a tree structure diagram of dynamic event classification may be finally obtained through gradual iteration. For example, refer to FIG. 3. The classification result shown in FIG. 3 is only an example. In actual processing, different classification results are obtained based on different consideration dimensions.

In a possible implementation, the m to-be-classified dynamic events may also include both a dynamic event with a large division granularity and a dynamic event with a small division granularity. The dynamic event with a small division granularity may be a dynamic subevent of the dynamic event with a large division granularity, or the dynamic event with a small division granularity is a subtype of the dynamic event with a large division granularity, and the dynamic event with a large division granularity is a parent type of the dynamic event with a small division granularity, such as the weather condition, the rainy condition, and the snowy condition. In this case, if the association degree between the parent type and the subtype is large or the distance between the parent type and the subtype is small, the parent type and the subtype may be classified into the same type.

The following describes a second possible implementation, namely, an implementation 2, for the obtaining at least one association degree between m types of dynamic events based on n dimensions, and grouping the m types of dynamic events based on the at least one association degree to obtain a plurality of groups.

In this implementation, the n dimensions have a priority order, and therefore association degree between every two of the m types of dynamic events in the first dimension may be first obtained. Then, the m types of dynamic events are grouped based on the association degree to obtain a plurality of groups. Then, dynamic events classified in a higher-level dimension are further classified in a consecutive descending order of dimension priorities, until classification based on a dimension with a lowest priority is completed, and a result of classification completion is a final classification result.

For example, it is assumed that n is 3, and priorities of the three dimensions in descending order are respectively a first dimension, a second dimension, and a third dimension. In this case, the association degree between every two of the m types of dynamic events in the first dimension is first obtained, and $c_1$ dynamic event types are obtained by classifying the m types of dynamic events based on the association degree, where $c_1$ is a positive integer greater than 0. Each of the $c_1$ dynamic event types includes one or more of the m types of dynamic events. For a specific process of classifying the dynamic events based on the association degree, refer to the description corresponding to Table 3. Details are not described herein again.

Then, an association degree between every two of the dynamic events in each of the $c_1$ dynamic event types in the second dimension is obtained based on the $c_1$ dynamic event types, and the dynamic events in each type are further classified based on the association degree between every two of the dynamic events in each type. After the dynamic events in each type are further classified, $c_2$ dynamic event types are obtained, where $c_2$ is a positive integer greater than 0.

Then, an association degree between every two of the dynamic events in each of the $c_2$ dynamic event types in the third dimension is obtained based on the $c_2$ dynamic event types, and the dynamic events in each type are further classified based on the association degree between every two of the dynamic events in each type. After the dynamic events in each type are further classified, $c_3$ dynamic event types are obtained, where $c_3$ is a positive integer greater than 0. The $c_3$ dynamic event types are final classification results.

For ease of understanding, an example is used below for description.

The foregoing five dynamic events are still classified by using the foregoing two dimensions: the meaning of the event and the geometric expression of the event as an example for description. It is assumed that a priority of the meaning of the event is higher than that of the geometric expression of the event, the five events, namely, the weather condition, the road surface environment, the road construction, the traffic accident, and the traffic light status, are classified based on the meaning of the event.

Specifically, the association degrees between every two of the five dynamic events in the dimension of the meaning of the event are first obtained. For details, refer to Table 1. Similarly, a threshold may be set as a classification basis. Similarly, the threshold may be set to 0.7, and two dynamic events whose association degree is greater than the threshold are classified into a same type. In this case, the weather condition and the road surface environment may be classified into one type and collectively referred to as an environment type, and the road construction and the traffic accident may be classified into one type and collectively referred to as a traffic type. Theoretically, the traffic light status is classified into an individual type. However, the traffic light status is highly associated with the traffic type. Therefore, the traffic light status may also be classified into the traffic type. Based on the dimension of the meaning of the event, the foregoing five dynamic events may be classified into two types: the environment type and the traffic type.

Based on the environment type and the traffic type obtained through the foregoing classification, the two types of dynamic events are further classified based on the geometric expression of the event. First, the geometric expression association degree between the weather condition and the road surface environment in the environment type is obtained, and the geometric expression association degree between the road construction, the traffic accident, and the traffic light status in the traffic type is obtained. For these association degrees, refer to Table 2. Details are not described herein again. Similarly, the threshold may be set to 0.7, and two dynamic events whose association degrees are greater than the threshold are classified into a same type. In this case, the geometric expression association degree between the weather condition and the road surface environment in the environment type is 0.8, which is greater than the threshold. Therefore, the weather condition and the road surface environment are still classified into a same type. The geometric expression association degree between the road construction and the traffic accident in the traffic type is 1, indicating that the geometric expressions of the two events are the same, and therefore the two events are still classified into a same type. However, the geometric expression association degree between the traffic light status and both of the road construction and the traffic accident is 0, and the traffic light status is not classified into a same type as the road construction and the traffic accident, but classified into an individual type.

In conclusion, the classification results of the foregoing five events are as follows: The weather condition and the road surface environment are classified into one type, the road construction and the traffic accident are classified into one type, and the traffic light status is classified into the individual type.

It should be noted that in this application, different classification results may be obtained by classifying the m types of dynamic events based on different classification dimensions. Therefore, on a premise that availability is met, some events are allowed to be classified to have a specific grayscale and flexibility.

S 102: Based on that an obtained first dynamic event is a first type of dynamic event, determine that the first dynamic event belongs to a first group.

In a specific embodiment, after the dynamic events are classified by using the foregoing method, a classification result may be saved for subsequent invoking. The classification result may be stored in a form of a dynamic event classification table, or may be stored in a hierarchical indexed tree storage structure.

Optionally, for ease of storage and search, each dynamic event may be stored after being encoded. In this way, search may be performed through encoding, to improve search efficiency. It should be noted that, if the dynamic events are stored in a hierarchical indexed tree storage structure, for ease of query, each dynamic event and a type of the dynamic event may be encoded, and the code of the type has a mapping relationship with the code of the dynamic event included in the type or the code of the subtype included in the type. For example, it is assumed that dynamic events are stored in three layers, where a first layer includes a plurality of coarse-grained dynamic event types, a second layer includes a plurality of fine-grained dynamic event types in each type of the plurality of coarse-grained types, and a third layer includes dynamic events in each type of the plurality of fine-grained types. In this way, the dynamic event types of the first layer and the second layer are encoded respectively, and the dynamic events of the third layer are encoded, where the code of the fine-grained type of the second layer is mapped to the code of the coarse-grained type of the first layer, and the code of the dynamic event of the third layer is mapped to the code of the type of the second layer. When querying dynamic events, the corresponding events may be quickly queried based on the mapping relationship between the codes of the layers.

In addition, each dynamic event may be associated with a corresponding layer based on the foregoing multiple groups. For example, dynamic events of a same type may be associated with a same layer, and different dynamic events may be associated with different layers. In this way, each dynamic event may be efficiently and orderly expressed on the high-definition map by using different layers. For example, the m types of dynamic events include a second dynamic event and a third dynamic event. The second dynamic event and the first dynamic event belong to the first group in the plurality of groups. The third dynamic event belongs to a second group in the plurality of groups. In this case, the first dynamic event and the second dynamic event may be associated with a first layer of the dynamic information layer of the high-definition map for expression. The third dynamic event may be associated with a second layer of the dynamic information layer of the high-definition map for expression. The first layer and the second layer are two different dynamic information layers of the high-definition map. For example, the first dynamic event may be rain, the second dynamic event may be snow, and the third dynamic event may be a traffic light status. It may be learned from FIG. 2 that rain and snow belong to a group of sunny, rainy, and snowy, and the traffic light status belongs to a group, namely, a traffic light status group. Therefore, rain and snow may be associated with a same layer for expression, and the traffic light status may be associated with another layer for expression.

Optionally, to facilitate management of each layer, the layer may alternatively be identified by using a code. Each layer code may uniquely identify a layer. In this way, an association between a layer and a dynamic event may alternatively be implemented by using an association between codes.

Specifically, in an actual application process of the high-definition map, a server may obtain various dynamic events in real time. To obtain these dynamic events, the server needs to know which type the dynamic events belong to, to query corresponding information. For example, it is assumed that different dynamic events are associated with and mapped to specific expression manners of the dynamic events on the high-definition map. In this case, a corresponding expression manner can be quickly queried based on a type of the dynamic event, so that the dynamic events can be quickly expressed on the high-definition map and provided for an object that uses the map, for example, an autonomous driving vehicle or a driver, for reference.

Specifically, it is assumed that the obtained first dynamic event belongs to the first type of dynamic event, and a specific type of the first type of dynamic event may be learned by querying a stored dynamic event classification table or a hierarchical indexed structure, so that corresponding associated information may be further queried. For example, the classification result shown in FIG. 3 is used as an example for description. It is assumed that the obtained first dynamic event is snow. The server may learn through comparison that the snow event belongs to the dynamic event of the weather condition. The weather condition belongs to an environment information group, so that it may be determined that the snow event belongs to the environment information group. In this way, the server may search the environment information group for information of the snow event at the layer of the high-definition map, and update a snowy status at the layer.

In a possible implementation, if a new dynamic event that is not included in the foregoing m types of dynamic events occurs, the new dynamic event and the m types of dynamic events may be classified together by using the classification method described in FIG. 1, to obtain and store a new classification result.

Alternatively, in another possible implementation, when a new dynamic event that is not included in the m types of dynamic events occurs, a type of the new dynamic event may be determined based on a classification result of the m types of dynamic events by calculating an association degree between the new dynamic event and each type in the classification result, and then the new dynamic event is classified into a corresponding type. Optionally, the new dynamic event may be encoded in the same way, and then the code is associated with and mapped to the code of the type of the new dynamic event.

In conclusion, compared with a conventional technology, in this application, various dynamic events used by the high-definition map are classified from a plurality of dimensions, so that more appropriate classification can be implemented, a storage structure of the various dynamic events is clear and appropriate, and management is facilitated. This can reduce resource overheads and improve storage and management efficiency during storage and management of the dynamic events of the high-definition map. In addition, priorities of different types of dynamic events are different. An appropriate dynamic event type is obtained in this application, so that a priority of a dynamic event can be quickly determined. Therefore, when a data transmission bandwidth is limited, data of a higher level is preferentially transmitted to a user of the high-definition map, so that a quicker and effective response is made to an operation. For vehicle driving, driving safety and stability of the vehicle can be further improved.

The foregoing mainly describes a method for classifying dynamic events according to an embodiment of this application. It may be understood that, to implement the foregoing functions, each device includes corresponding hardware structures and/or software modules for performing corresponding functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In embodiments of this application, the device may be divided into function modules based on the foregoing method examples. For example, each function module may be obtained through division based on each corresponding function, or two or more functions may be integrated into one module. The integrated module may be implemented in a form of hardware, or may be implemented in a form of a software functional module. It should be noted that, in embodiments of this application, division into modules is an example, and is merely a logical function division. In an actual implementation, another division manner may be used.

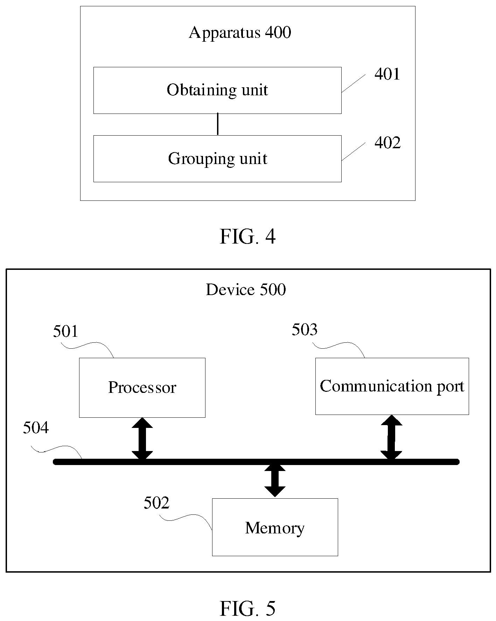

When each function module is obtained through division based on each corresponding function, FIG. 4 is a schematic diagram of a possible logical structure of an apparatus. The apparatus may be the foregoing server, or may be a chip in the server, or may be a processing system in the server, or the like. The apparatus 400 includes an obtaining unit 401 and a grouping unit 402.

The obtaining unit 401 is configured to obtain at least one association degree between m types of dynamic events based on n dimensions. The obtaining unit 401 may perform the obtaining operation in step 101 shown in FIG. 1.

The grouping unit 402 is configured to group the m types of dynamic events based on the at least one association degree to obtain a plurality of groups, where the m types of dynamic events are events that cause a change to a dynamic information layer of a high-definition map, n and m are integers greater than 1, and a first type of dynamic event in the m types of dynamic events belongs to a first group in the plurality of groups. The grouping unit 402 may perform the grouping operation in step 101 shown in FIG. 1.

In a possible implementation, the apparatus 400 further includes a determining unit, configured to: based on that an obtained first dynamic event is the first type of dynamic event, determine that the first dynamic event belongs to the first group. The determining unit may perform the operation in step 102 shown in FIG. 1.

In a possible implementation, the n dimensions include at least two of the following dimensions: a fine-grained dynamic event range covered by the event, a meaning of the event, a geometric expression of the event, impact of the event, an action object of the event, a source of the event, a priority of the event, or an event status update frequency.

In a possible implementation, the obtaining unit 401 is specifically configured to:

obtain an association degree between every two of the m types of dynamic events in each of the n dimensions; and obtain the at least one association degree by combining the association degree in each dimension.

In a possible implementation, the grouping unit 402 is specifically configured to:

compare each of the at least one association degree with a first numerical range; and group two types of dynamic events corresponding to the association degree in the first numerical range into a same group.

In a possible implementation, the obtaining unit 401 is specifically configured to obtain a first association degree between every two of the m types of dynamic events in a first dimension.

The grouping unit 402 is specifically configured to group the m types of dynamic events based on the first association degree to obtain a first plurality of groups, where the first plurality of groups include a second group, the second group includes p types of dynamic events in the m types of dynamic events, and p is a positive integer greater than 1.

The obtaining unit 401 is further specifically configured to obtain a second association degree between every two of the p types of dynamic events in a second dimension, where the second dimension is a dimension that is in the n dimensions and whose priority is one level lower than that of the first dimension.

The grouping unit 402 is further specifically configured to group the p types of dynamic events based on the second association degree to obtain a second plurality of groups.

In a possible implementation, the apparatus 400 further includes:

an association unit, configured to associate the m types of dynamic events with a plurality of layers of the high-definition map based on the plurality of groups.

For specific operations and beneficial effects of the units in the apparatus 400 shown in FIG. 4, refer to the descriptions in the method and the possible implementations of the method in FIG. 5. Details are not described herein again.

FIG. 5 is a schematic diagram of a possible hardware structure of a device according to this application. The device may be the first network device in the method in the foregoing embodiment. The device 500 includes a processor 501, a memory 502, and a communication port 503. The processor 501, the communication port 503, and the memory 502 may be connected to each other, or may be connected to each other through a bus 504.

For example, the memory 502 is configured to store a computer program and data of the device 500. The memory 502 may include but is not limited to a random access memory (random access memory, RAM), a read-only memory (read-only memory, ROM), an erasable programmable read-only memory (erasable programmable read only memory, EPROM), a compact disc read-only memory (compact disc read-only memory, CD-ROM), or the like.

When the embodiment shown in FIG. 4 is implemented, software or program code used for performing functions of all or some units in FIG. 4 is stored in the memory 502.

When the embodiment in FIG. 4 is implemented, if software or program code used by functions of some units is stored in the memory 502, in addition to invoking the program code in the memory 502 to implement some functions, the processor 501 may further cooperate with another component (for example, the communication port 503) to complete another function (for example, a function of receiving data) described in the embodiment in FIG. 4.

There may be a plurality of communication ports 503. The communication ports 503 are configured to support the device 500 in performing communication, for example, receiving or sending data or a signal.

For example, the processor 501 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 501 may be configured to read a program stored in the memory 502, to perform the method and the possible implementations in FIG. 1. For example, the processor 501 may perform the following operations:

obtaining at least one association degree between m types of dynamic events based on n dimensions, and grouping the m types of dynamic events based on the at least one association degree to obtain a plurality of groups, where the m types of dynamic events are events that cause a change to a dynamic information layer of a high-definition map, and n and m are integers greater than 1.

In a possible implementation, the processor 501 may perform the following operations:
obtaining at least one association degree between m types of dynamic events based on n dimensions, and grouping the m types of dynamic events based on the at least one association degree to obtain a plurality of groups, where the m types of dynamic events are events that cause a change to a dynamic information layer of a high-definition map, n and m are integers greater than 1, and a first type of dynamic event in the m types of dynamic events belongs to a first group in the plurality of groups; and based on that an obtained first dynamic event is the first type of dynamic event, determining that the first dynamic event belongs to the first group.

For specific operations and beneficial effects of the device 500 shown in FIG. 5, refer to the descriptions in the method and the possible implementations of the method in FIG. 1. Details are not described herein again.

An embodiment of this application further provides an apparatus. The apparatus includes a processor, a communication port, and a memory. The apparatus is configured to perform the method according to any one of the foregoing embodiments and the possible embodiments.

In a possible implementation, the apparatus is a chip or a system on a chip (System on a Chip, SoC).

An embodiment of this application further provides a computer-readable storage medium. The computer-readable storage medium stores a computer program. The computer program is executed by a processor to implement the method in any one of the foregoing embodiments and the possible embodiments of the foregoing embodiments.

An embodiment of this application further provides a computer program product. When the computer program product is read and executed by a computer, the method in any one of the foregoing embodiments and the possible embodiments of the foregoing embodiments is performed.

An embodiment of this application further provides a computer program. When the computer program is executed on a computer, the computer is enabled to implement the method in any one of the foregoing embodiments and the possible embodiments of the foregoing embodiments.

In conclusion, compared with a conventional technology, in this application, various dynamic events used by a high-definition map are classified from a plurality of dimensions, so that more appropriate classification can be implemented. This can reduce resource overheads and improve storage and management efficiency during storage and management of the dynamic events of the high-definition map.

In this application, the terms "first", "second", and the like are used to distinguish between same or similar items whose effects and functions are basically the same. It should be understood that there is no logical or time-sequence dependency between "first", "second", and "n$^{th}$", and a quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A method for classifying dynamic events, wherein the method comprises:

   obtaining at least one association degree between m types of dynamic events based on n dimensions, and grouping the m types of dynamic events based on the at least one association degree to obtain a plurality of groups, wherein the m types of dynamic events are events that cause a change to a dynamic information layer of a high-definition map, n and m are integers greater than 1, and a first type of dynamic event in the m types of dynamic events belongs to a first group in the plurality of groups; and

   based on that an obtained first dynamic event is the first type of dynamic event, determining that the first dynamic event belongs to the first group.

2. The method according to claim 1, wherein the n dimensions comprise at least two of the following dimensions: a fine-grained dynamic event range covered by the event, a meaning of the event, a geometric expression of the event, impact of the event, an action object of the event, a source of the event, a priority of the event, or an event status update frequency.

3. The method according to claim 1 or 2, wherein the obtaining at least one association degree between m types of dynamic events based on n dimensions comprises:

   obtaining an association degree between every two of the m types of dynamic events in each of the n dimensions; and

   obtaining the at least one association degree by combining the association degree in each dimension.

4. The method according to any one of claims 1 to 3, wherein the grouping the m types of dynamic events based on the at least one association degree to obtain a plurality of groups comprises:

   comparing each of the at least one association degree with a first numerical range; and

   grouping two types of dynamic events corresponding to the association degree in the first numerical range into a same group.

5. The method according to claim 1 or 2, wherein the n dimensions have a priority order, and the obtaining at least one association degree between m types of dynamic events based on n dimensions, and grouping the m types of dynamic events based on the at least one association degree to obtain a plurality of groups comprises:

   obtaining a first association degree between every two of the m types of dynamic events in a first dimension; grouping the m types of dynamic events based on the first association degree to obtain a first plurality of groups, wherein the first plurality of groups comprise a second group, the second group comprises p types of dynamic events in the m types of dynamic events, and p is a positive integer greater than 1;

   obtaining a second association degree between every two of the p types of dynamic events in the second group in a second dimension, wherein the second dimension is a dimension that is in the n dimensions and whose priority is one level lower than that of the first dimension; and

   grouping the p types of dynamic events based on the second association degree to obtain a second plurality of groups.

6. The method according to any one of claims 1 to 5, wherein the m types of dynamic events are associated with a plurality of layers of the high-definition map based on the plurality of groups.

7. A device, wherein the device comprises:

   an obtaining unit, configured to obtain at least one association degree between m types of dynamic events based on n dimensions;

   a grouping unit, configured to group the m types of dynamic events based on the at least one association degree to obtain a plurality of groups, wherein the m types of dynamic events are events that cause a change to a dynamic information layer of a high-definition map, n and m are integers greater than 1, and a first type of dynamic event in the m types of dynamic events belongs to a first group in the plurality of groups; and

   a determining unit, configured to: based on that an obtained first dynamic event is the first type of dynamic event, determine that the first dynamic event belongs to the first group.

8. The device according to claim 7, wherein the n dimensions comprise at least two of the following dimensions: a fine-grained dynamic event range covered by the event, a meaning of the event, a geometric expression of the event, impact of the event, an action object of the event, a source of the event, a priority of the event, or an event status update frequency.

9. The device according to claim 7 or 8, wherein the obtaining unit is specifically configured to:

   obtain an association degree between every two of the m types of dynamic events in each of the n dimensions; and
   obtain the at least one association degree by combining the association degree in each dimension.

10. The device according to any one of claims 7 to 9, wherein the grouping unit is specifically configured to:

    compare each of the at least one association degree with a first numerical range; and
    group two types of dynamic events corresponding to the association degree in the first numerical range into a same group.

11. The device according to claim 7 or 8, wherein
    the obtaining unit is specifically configured to obtain a first association degree between every two of the m types of dynamic events in a first dimension;

    the grouping unit is specifically configured to group the m types of dynamic events based on the first association degree to obtain a first plurality of groups, wherein the first plurality of groups comprise a second group, the second group comprises p types of dynamic events in the m types of dynamic events, and p is a positive integer greater than 1;
    the obtaining unit is further specifically configured to obtain a second association degree between every two of the p types of dynamic events in the second group in a second dimension, wherein the second dimension is a dimension that is in the n dimensions and whose priority is one level lower than that of the first dimension; and
    the grouping unit is further specifically configured to group the p types of dynamic events based on the second association degree to obtain a second plurality of groups.

12. The device according to any one of claims 7 to 11, wherein the m types of dynamic events are associated with a plurality of layers of the high-definition map based on the plurality of groups.

13. A device, wherein the device comprises a processor and a memory, the memory is configured to store a computer program, and the processor is configured to execute the computer program stored in the memory, so that the device performs the method according to any one of claims 1 to 6.

14. A computer-readable storage medium, wherein the computer-readable storage medium stores a computer program, and the computer program is executed by a processor to implement the method according to any one of claims 1 to 6.

S101: Obtain at least one association degree between m types of dynamic events based on n dimensions, and group the m types of dynamic events based on the at least one association degree to obtain a plurality of groups, where n and m are integers greater than 1, and the m types of dynamic events are events that cause a change to information in a high-definition map

S102: Based on that an obtained first dynamic event is a first type of dynamic event, determine that the first dynamic event belongs to a first group

FIG. 1

```
                          ┌──────────────────────────────────────────────┐
                    ┌─────┤         Sunny, cloudy, rainy, and snowy        │
                    │     └──────────────────────────────────────────────┘
                    │     ┌──────────────────────────────────────────────┐
                    ├─────┤                    Foggy                       │
                    │     └──────────────────────────────────────────────┘
                    │     ┌──────────────────────────────────────────────┐
                    ├─────┤                    Windy                       │
                    │     └──────────────────────────────────────────────┘
                    │     ┌──────────────────────────────────────────────┐
                    ├─────┤                 Road covering                  │
                    │     └──────────────────────────────────────────────┘
                    │     ┌──────────────────────────────────────────────┐
                    ├─────┤            Road adhesion coefficient           │
                    │     └──────────────────────────────────────────────┘
                    │     ┌──────────────────────────────────────────────┐
                    ├─────┤                 Road visibility                │
                    │     └──────────────────────────────────────────────┘
                    │     ┌──────────────────────────────────────────────┐
                    ├─────┤         Temporary point of interest information │
                    │     └──────────────────────────────────────────────┘
 ┌─────────┐        │     ┌──────────────────────────────────────────────┐
 │ Dynamic │────────┼─────┤            Recommendation information          │
 │  event  │        │     └──────────────────────────────────────────────┘
 └─────────┘        │     ┌──────────────────────────────────────────────┐
                    ├─────┤                Road traffic event             │
                    │     └──────────────────────────────────────────────┘
                    │     ┌──────────────────────────────────────────────┐
                    ├─────┤              Traffic flow information          │
                    │     └──────────────────────────────────────────────┘
                    │     ┌──────────────────────────────────────────────┐
                    ├─────┤                Traffic light status           │
                    │     └──────────────────────────────────────────────┘
                    │     ┌──────────────────────────────────────────────┐
                    ├─────┤                 Vehicle obstacle              │
                    │     └──────────────────────────────────────────────┘
                    │     ┌──────────────────────────────────────────────┐
                    ├─────┤                 Other obstacles               │
                    │     └──────────────────────────────────────────────┘
                    │     ┌──────────────────────────────────────────────┐
                    ├─────┤              Risk warning information          │
                    │     └──────────────────────────────────────────────┘
                    │     ┌──────────────────────────────────────────────┐
                    ├─────┤             Collaborative driving status       │
                    │     └──────────────────────────────────────────────┘
                    │     ┌──────────────────────────────────────────────┐
                    ├─────┤              Route planning information        │
                    │     └──────────────────────────────────────────────┘
                    │     ┌──────────────────────────────────────────────┐
                    └─────┤            Network topology change group       │
                          └──────────────────────────────────────────────┘
```

FIG. 2

FIG. 3

Apparatus 400

Obtaining unit — 401

Grouping unit — 402

FIG. 4

Device 500

501

Processor

503

Communication port

504

502

Memory

FIG. 5

<div align="center">

**INTERNATIONAL SEARCH REPORT**

</div>

| | International application No. |
|---|---|
| | **PCT/CN2021/129337** |

**A. CLASSIFICATION OF SUBJECT MATTER**

G06K 9/62(2022.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, DWPI, IEEE, ISI, CNKI: 高精度, 地图, 动态, 图层, 事件, 关联, 相关, 分组, 分类, 无人驾驶, 自动驾驶, 路面, 天气, 更新, 效率, 频率, 优先级, high precision, map, dynamic, layer, event, correlation, group, classification, road, weather, update, efficiency, frequency, priority

**C. DOCUMENTS CONSIDERED TO BE RELEVANT**

| Category* | Citation of document, with indication, where appropriate, of the relevant passages | Relevant to claim No. |
|---|---|---|
| X | CN 109657031 A (GUOQI (BEIJING) INTELLIGENT NETWORK UNITED AUTOMOBILE RESEARCH INSTITUTE CO., LTD. et al.) 19 April 2019 (2019-04-19) description, paragraphs [0002]-[0068] | 1-4, 6-10, 12-14 |
| A | CN 111524357 A (HEBEI DEGUROON ELECTRONIC TECHNOLOGY CO., LTD.) 11 August 2020 (2020-08-11) entire document | 1-14 |
| A | CN 109774720 A (BEIJING BAIDU NETCOM SCIENCE AND TECHNOLOGY CO., LTD.) 21 May 2019 (2019-05-21) entire document | 1-14 |
| A | CN 109256028 A (WUHAN ZHONGXIANG TECHNOLOGY CO., LTD.) 22 January 2019 (2019-01-22) entire document | 1-14 |
| A | US 2018188045 A1 (DEEPMAP INC.) 05 July 2018 (2018-07-05) entire document | 1-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 January 2022** | **08 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/129337**

| Patent document cited in search report | | | Publication date (day/month/year) | Patent family member(s) | | | Publication date (day/month/year) |
|---|---|---|---|---|---|---|---|
| CN | 109657031 | A | 19 April 2019 | None | | | |
| CN | 111524357 | A | 11 August 2020 | None | | | |
| CN | 109774720 | A | 21 May 2019 | None | | | |
| CN | 109256028 | A | 22 January 2019 | None | | | |
| US | 2018188045 | A1 | 05 July 2018 | EP | 3563265 | A1 | 06 November 2019 |
| | | | | EP | 3563265 | B1 | 02 June 2021 |
| | | | | US | 10794711 | B2 | 06 October 2020 |
| | | | | CN | 110832474 | A | 21 February 2020 |
| | | | | WO | 2018126215 | A1 | 05 July 2018 |
| | | | | US | 2018188044 | A1 | 05 July 2018 |
| | | | | US | 10429194 | B2 | 01 October 2019 |
| | | | | US | 2021254983 | A1 | 19 August 2021 |
| | | | | US | 2018188037 | A1 | 05 July 2018 |
| | | | | US | 10816346 | B2 | 27 October 2020 |
| | | | | US | 2019368882 | A1 | 05 December 2019 |
| | | | | US | 10801845 | B2 | 13 October 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011254494